Europäisches Patentamt

European Patent Office

Office européen des brevets

(11) Publication number: **0 136 070**
**B1**

(12) **EUROPEAN PATENT SPECIFICATION**

(45) Date of publication of patent specification: **31.05.89**

(21) Application number: **84305735.7**

(22) Date of filing: **22.08.84**

(51) Int. Cl.⁴: **G 11 B 7/26**

(54) Erasable optical data storage medium and method for recording data on the medium.

(30) Priority: **22.08.83 US 525813**

(43) Date of publication of application:
**03.04.85 Bulletin 85/14**

(45) Publication of the grant of the patent:
**31.05.89 Bulletin 89/22**

(84) Designated Contracting States:
**AT BE CH DE FR GB IT LI NL SE**

(56) References cited:
**EP-A-0 097 509**
**DE-A-3 038 533**
**US-A-4 264 986**
**US-A-4 278 734**
**US-A-4 371 954**

(73) Proprietor: **OPTICAL DATA, INC.**
**9400 S.W. Gemini Drive**
**Beaverton Oregon 97005 (US)**

(72) Inventor: **Feyrer, Clyde Dewain**
**14305 Southwest Alibhai**
**Beaverton Oregon, 97005 (US)**
Inventor: **Gordon, Norman Ross**
**Route 4, Box 4376**
**Kennewick Washington, 99336 (US)**
Inventor: **Skiens, W. Eugene**
**125 Jackson Court**
**Kennewick Washington, 99352 (US)**

(74) Representative: **Skailes, Humphrey John et al**
**Frank B. Dehn & Co. Imperial House 15-19**
**Kingsway**
**London WC2B 6UZ (GB)**

Courier Press, Leamington Spa, England.

**Description**

Background of the invention
Field of the invention

The present invention relates generally to a data storage medium and methods and apparatus for recording data on the medium, and, more particularly, to an erasable optical data storage medium and methods and apparatus for writing, erasing, and reading data on the data storage medium.

Discussion of background and prior art

Currently, the practical or commercial techniques for recording data are based substantially on magnetic storage technology. In general, the data are stored on magnetic media, such as discs and tapes, on which logic 1 data bits and logic 0 data bits are represented by the magnetization of a medium. For example, one direction of magnetization of a given location or bit storage area of the data storage medium can represent a logic 1, while another direction of magnetization of that bit storage area can represent a logic 0. Each data bit is written on the medium by using a recording head to magnetize the given bit storage area, and each data bit can be erased by writing another bit over the given bit storage area using the magnetic recording head. Each data bit is read by using the recording head to sense the magnetization of the given bit area.

While the magnetic storage technology is commercially successful and advantageous, since about early in the decade of the 1960s, a recording technique known generically as optical recording has been and continues to be considered a very promising alternative for storing data. Optical recording potentially has significant advantages over magnetic recording, including higher data storage density, higher data rates, and longer data archival capabilities. One type of optical recording that has the highest potential is an optical recording apparatus or system which uses, in lieu of the magnetic recording head, a highly focused laser beam as an ultra-fine recording stylus to write and read data at a very high data rate and recording density, and to erase the data. The system includes an erasable optical data storage medium that responds to the laser beam to store the data. For example, the data storage medium responds to the heat generated by the laser beam to erase and write the data, and responds to the light of the laser beam to read the data.

In one optical recording system, to write a data bit, a laser beam is focused on the erasable data storage medium to heat the medium and, thereby, induce a stable transition from one morphological or physical state, e.g., an amorphous state, to another morphological or physical state, e.g., a crystalline state. The two physical states have different optical properties which are the optical transmittance and optical reflectance properties of the respective states. Therefore, to read the data bit, light from the laser beam, which is at a lower power level than is used for writing, is focused on the data storage medium and will be transmitted or reflected by the medium depending on the physical state of the medium, thereby representing a logic 1 or logic 0. The data bit can be erased by again heating the material with the laser beam at a higher power level to return the medium to its original physical state.

The above-mentioned erasable optical data storage medium is made of semiconductor or chalcogenide materials that, as already stated, change from one state to another when heated. One problem with this data storage medium is that these changes in state are very small or slight, i.e., the amorphous and crystalline states are not substantially distinguishable optically. Therefore, a high signal-to-noise ratio of a reflected laser beam is not obtainable to distinguish between a logic 1 and a logic 0 upon reading the data bit. Another problem with this data storage medium is that the data rate, in particular the writing and erasing speeds, is undesirably very low, e.g., one microsecond. This results from the relatively long time that is required for a given material to undergo the change from one physical state to the other. Another problem is that a relatively high amount of laser energy or power is required to heat the material so that it can transform from one physical state to the other. Yet another problem is that due to this physical state transformation, the data storage medium will fatigue after a relatively few number of erase/write cycles. This fatigue factor will not be competitive with magnetic storage technology, which can achieve a number of erase/write cycles on the order of one million.

U.S. Patent No. 4,278,734 to Ohta et al, discloses an optical medium in which the material of the medium changes physical state, leading to an increase or decrease in optical density. Ohta et al appears to have solved the data rate problem in that data may be written or erased quickly, e.g. in 50 nsec. Ohta et al also appears to have solved the contrast problem in that the physical states are distinguishable optically. However, one disadvantage of Ohta et al is that the data cannot be erased, bit-by-bit, since a localized bit area location cannot be achieved. Also, the physical change of state or transformation cannot occur on a surface which has anomalies or irregularities in the surface. Furthermore, the materials used for the optical medium are expensive.

U.S. Patent No. 4,264,986 to Willis, issued April 28, 1981, discloses another type of erasable optical data storage medium. To write a data bit, a laser beam is focused on the medium to induce, by heating, a volumetric expansion of the bit area being heated, thereby creating a small bump or deformation. The presence of the bump represents one logic state, while the absence of the bump represents the other logic state. Upon this heating, the bit area of the data storage medium changes from one physical state, i.e., crystalline, to another physical state, i.e., amorphous, which is the phenomenon that causes the volumetric expansion, thereby creating the small bump which becomes reversibly fixed. A bit is read by focusing on the bit area a laser beam of lower power than is used for writing, and then detecting the amount or scattering of reflected light. If the bump is present, the reflected light will be substantially scattered, so that the intensity of the detected light will be low. If no bump is present, the reflected light will not be substantially scattered, so that the intensity of the detected light will be higher. This read/write recording method is attractive, since it provides a good signal-to-noise ratio to distinguish a logic 1 from a logic 0.

One problem with the erasable optical data storage medium of U.S. Patent No. 4,264,986 is that the laser beam must, raise the material to a high temperature, above the melting point, to erase or remove the bump. This has the disadvantage of requiring high-powered lasers. Moreover, this melting of the bump may not leave the surface of the medium smooth, i.e., ripples can form on the surface upon the cooling of the material. Such a smooth surface is needed to be able to continually reproduce a satisfactory bump for properly reading the data bit. Yet another problem is that the data rate is relatively slow due to the need for the change in physical state of the material of the medium, which is a function of relatively slow cooling rates. Furthermore, fatigue, resulting from the physical change of state, is a problem with this data storage medium in that the number of erase/write cycles which can be achieved is only about one thousand.

U.S. patent No. 4,371,954 to Cornet, issued February 1, 1983, discloses an erasable optical data storage medium including a substrate, having a low coefficient of thermal expansion, which supports a dual layer having a bottom layer of material and a top layer of material. The bottom layer of material is a relatively inextensible metal or polymer having a high coefficient of thermal expansion, and the top layer is a metal alloy which is in a martensitic phase at ambient temperature and has a low coefficient of thermal expansion. Also, the bottom layer and top layer have a low adhesion to one another, i.e., they are not bonded together, and the latter has a transformation temperature $T_t$ above ambient and below the melting point of the former layer. Above the transformation temperature $T_t$, the top layer is in its "parent" phase.

To write a data bit, as described in U.S. Patent No. 4,371,954, a light pulse from a laser beam is absorbed by the dual layer, resulting in the heating of the dual layer at a temperature below the transformation temperature $T_t$, as well as a differential expansion between the two layers. The bottom layer delaminates or disengages from the substrate and volumetrically expands onto the top layer which forms a bump. Upon cooling, the top layer forms a reversibly fixed bump and the bottom layer contracts back onto the substrate.

To erase the data bit, as described in U.S. Patent No. 4,371,954, the martensitic top layer is raised to a temperature exceeding the transformation

temperature $T_t$, either by, for example, a higher power laser pulse or a slower displacement or movement of the data storage medium across the laser beam, thereby transforming the top layer to its parent phase. The top layer then contracts onto the bottom layer and, upon cooling, returns to its martensitic phase.

One problem with the erasable optical data storage medium of U.S. Patent No. 4,371,954 is that the metallic dual layer, and in particular the bottom layer, is relatively inextensible. Consequently, the bump that can be produced is not as high as is desirable for accurately reading the data bit. Another problem is that the top layer must change between the martensitic phase and the parent phase for erasing the data but not for writing the data. One disadvantage of this change of phase is that the erase mode is slow and, concomitantly, cannot occur as quickly as the write mode, thereby requiring significantly different data rates for the respective modes. Another disadvantage is that different laser power pulses are required for writing and erasing the data bit, with the latter being significantly higher, thereby requiring the use of high-powered lasers.

Yet another problem with U.S. Patent No. 4,371,954 is that the erasable optical data storage medium is highly susceptible to hard bit errors which are errors resulting from imperfections in the medium. More particularly, any anomalies or irregularities in the surface of the medium will affect the ability of the top layer to change between the martensitic and parent phases, resulting in bit errors. Still another problem results from the top layer being metallic or a metal alloy having a low thermal coefficient of expansion. This means that higher power light pulses are needed to expand this type of material, thereby again requiring high-powered lasers. Another problem is that the bottom layer disengages from the substrate upon writing a data bit. This has the disadvantage of enabling the bottom layer to "creep" about the substrate, thereby creating imperfections during use of the medium and preventing the medium from remaining smooth.

Summary of the invention

It is an object of the present invention to provide a novel data storage medium.

It is another object of the present invention to provide novel methods and apparatus for optically recording data.

Yet another object of the present invention is to provide an erasable optical data storage medium for storing data at a high data rate.

Another object of the present invention is to provide an erasable optical data storage medium for storing data using inexpensive low-power light sources.

Still another object of the present invention is to provide an erasable optical data storage medium having cycling characteristics competitive with magnetic storage technology.

It is another object of the present invention to use the erasable optical data storage medium in conjunction with any of a plurality of desired wavelengths.

Yet another object of the present invention is to be able to record data on a medium having irregularities or anomalies.

The invention thus provides an optical recording medium comprising: (a) a first layer of a first material; (b) a second layer of a second material on said first material said first and second layers being supported on a substrate; and (c) said first and second layers cooperating as a medium for forming an optically detectable deformation therein by thermal expansion of said first material without liquefaction or gasification of said first or second materials when said first layer is locally heated with light radiation of a first preselected wavelength; said medium characterized by (d) said first material and said second material being sufficiently bonded to each other to enable said second layer to hold said first material in stretched, expanded condition upon cessation of said light radiation and cooling of said first material, retaining said optically detectable deformation, said second layer being sufficiently strong and rigid to hold said first material in stretched, expanded condition.

The invention thus also provides a method of writing data in an optical data storage medium having a first layer of a first material and a second layer of a second material by heating said first material to thermally expand said first material, and permitting said expanding first material to deform said second layer causing an optically detectable deformation, said first and second layers being supported on a substrate, said method characterized by cooling said first material (18A), and causing said second layer to hold said first material in expanded condition.

Among many advantages to be described fully below, the present invention will write, erase and read data at high data rates, using low-power light sources such as lasers, and have a number of erase/write cycles that is competitive with magnetic storage technology.

Brief description of the drawings

The accompanying drawings, which are incorporated in and form a part of the specification, illustrate embodiments of the present invention, and together with the description, serve to explain the principles of the invention. In the drawings: mechanically, and to reading data optically, the first material and the second material being bonded together, and the first material and the second material, respectively, remaining in the same physical state upon the expansion and relaxation of the dual layer, means for generating a first laser beam and a second laser beam, the first material being absorptive of, and the second material being substantially transparent to, the first laser beam, and the second material being absorptive of the second laser beam, means for focusing the first laser beam on the first material to heat and elastically expand the first material onto the second material to write the data bit, means for focusing the second laser beam on the second material to heat the second material and to erase the data bit, and means for moving the erasable optical data storage medium relative to the first laser beam and the second laser beam.

Among many advantages to be described fully below, the present invention will write, erase and read data at high data rates, using low-power light sources such as lasers, and have a number of erase/write cycles that is competitive with magnetic storage technology.

Brief description of the drawings

The accompanying drawings, which are incorporated in and form a part of the specification, illustrate embodiments of the present invention, and together with the description, serve to explain the principles of the invention. In the drawings:

Fig. 1 is a view in perspective of a data storage medium of the present invention;

Fig. 2 is a section taken along lines 2—2 of Fig. 1 showing a bit area of the data storage medium in a relaxed condition;

Fig. 4A—Fig. 4C are views, similar to Fig. 2 and Fig. 3, showing an expanded condition of the data storage medium;

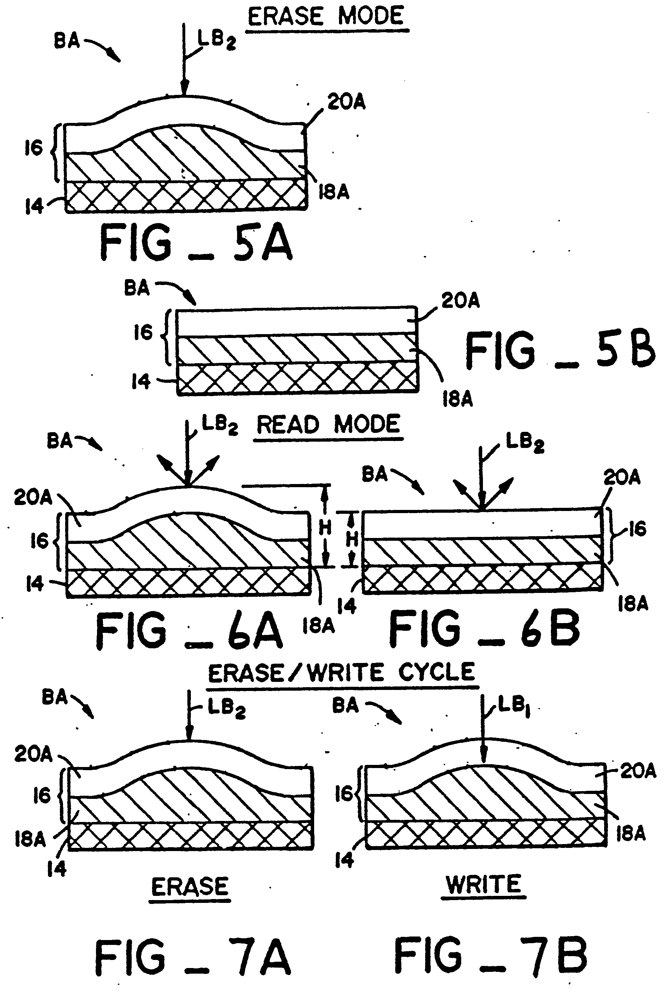

Fig. 4A—Fig. 4C are views, similar to Fig. 2 and Fig. 3, used to explain a write mode of the present invention;

Fig. 5A—Fig. 5B are views, similar to Fig. 2 and Fig. 3, used to explain an erase mode of the present invention;

Fig. 6A—Fig. 6B are views, similar to Fig. 2 and Fig. 3, used to explain a read mode of the present invention;

Fig. 7A—Fig. 7B are views, similar to Fig. 3, used to explain an erase/write cycle of the present invention;

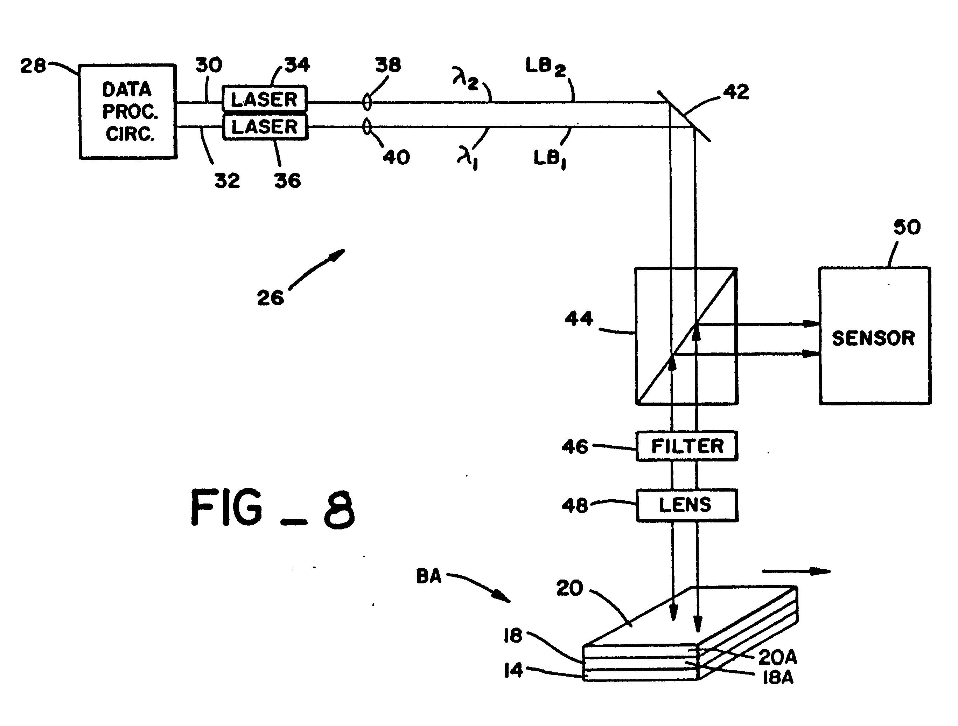

Fig. 8 is a block diagram of one embodiment of an optical recording apparatus of the present invention; and

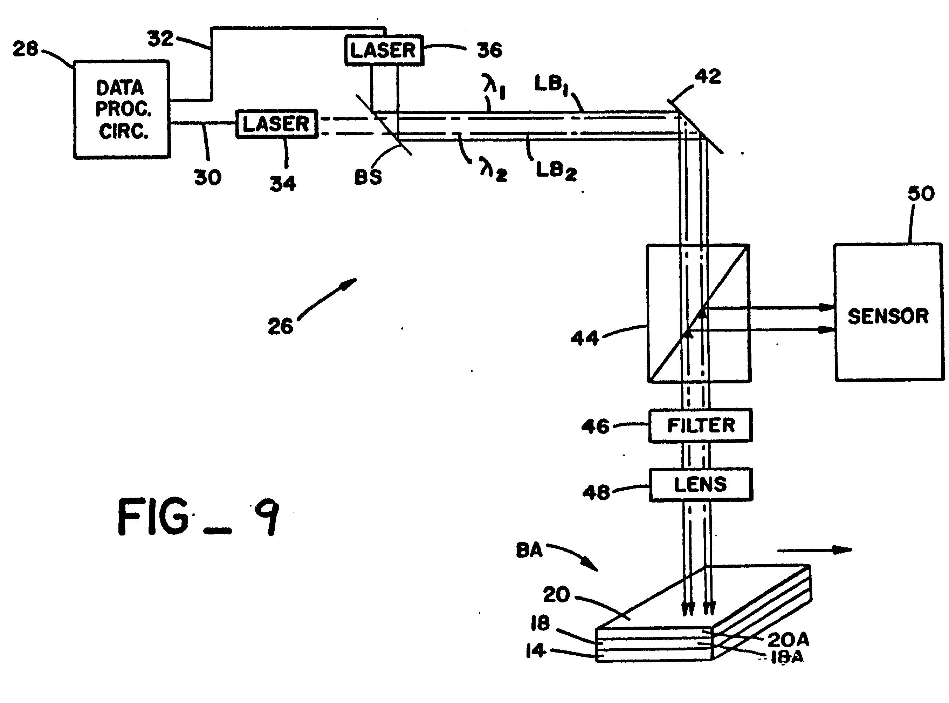

Fig. 9 is a block diagram of another embodiment of an optical recording apparatus of the present invention.

Detailed description of the invention

Reference will now be made in detail to the present preferred embodiments of the invention, examples of which are illustrated in the accompanying drawings.

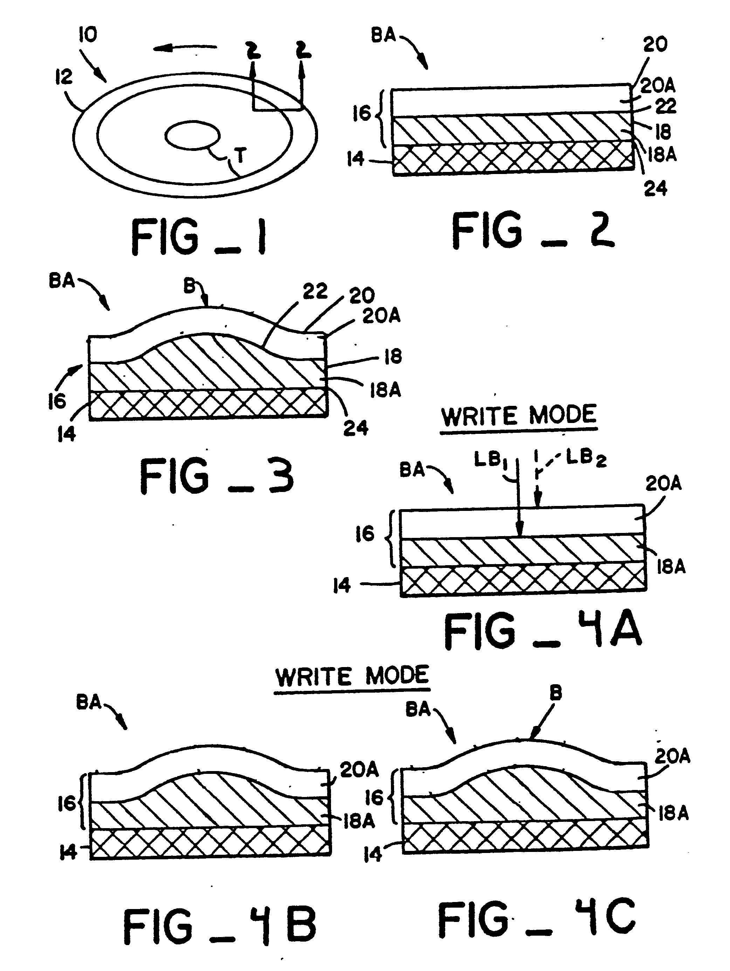

Fig. 1 illustrates generally an erasable data storage medium 10 for storing data words in which each of the data words has a plurality of bits that are a logic 1 or a logic 0. The erasable data storage medium 10 can be an erasable optical data storage disc 12 which stores the data words over a plurality of concentric tracks T. The optical disc 12 also may be rotatable in the direction shown by the arrow for data recording purposes to be described below.

Fig. 2 shows a section of a small bit area BA of the optical disc 12 for storing one data bit of logic 1 or logic 0. In particular, each bit area BA of the optical disc 12 includes a substrate 14 and a dual layer 16 deposited on the substrate 14. As will be further described, the dual layer 16 is susceptible to. expansion and relaxation, to writing data thermally (expansion), to erasing data thermally and mechanically (relaxation), and to reading data optically. Fig. 2 shows the dual layer 16 in a condition of relaxation corresponding to one logic state, e.g., logic 0, whereas Fig. 3 shows the dual layer 16 in the condition of expansion representing the other logic state, e.g., logic 1.

The dual layer 16 has a bottom layer 18 of one material 18A and a top layer 20 of another material 20A. Neither the material 18A nor material 20A changes physical state upon expansion or relaxation of the dual layer 16. The material 18A and material 20A are bonded together at their interface 22, so as to, for example, erase a data bit at a high data rate, as will be further described. In addition, the material 18A is deposited on the substrate 14 such that at their interface 24, material 18A does not delaminate from substrate 14 upon expansion of the dual layer 16, as shown in Fig. 3. This substantially eliminates any "creep" of layer 18 about substrate 14, whereby the bit area BA will remain smooth over repeated erase/write cycles, as will be further described. Thus, as illustrated in Fig. 3, upon expansion of the dual layer 16, and as a result of the bonding at interface 22 and at interface 24, material 18A and material 20A will continue to be bonded together, while material 18A will still be in contact with, or not have delaminated from, substrate 14.

Fig. 3 shows that the material 18A and the material 20A are deformed during expansion and, consequently, mechanical forces are produced in response to the expansion of the dual layer 16. As will be further described, these forces function, in part, to relax the dual layer 16 to the condition shown in Fig. 2 for purposes of quickly erasing a data bit.

Material 18A has (1) low thermal conductivity, (2) a high coefficient of thermal expansion, (3) a glass transition temperature, $T_g$, considerably below the glass transition temperature of material 20A, below which material 18A is glassy. That is, in connection with property (3), the material 18A is rubbery at ambient temperature as opposed, for example, to being in a glassy or brittle condition. This means that only relatively low-power heating is required to heat the rubbery material, resulting in localized, extensive or large, and rapid expansion of the material 18A due to these three properties, respectively. Also as a result of this localized expansion, high data storage density can be achieved. Material 18A also may be relatively highly cross-linked, so that upon expansion there is substantially no viscous flow of this material. In addition, material 18A is elastic, having a high yield strain, so that upon being held in an extended state, it will not exceed its elastic limit. Other properties and characteristics of material 18A will be described below.

Material 20A has (1) a glass transition tempera-

ture, $T_g$, considerably above that of material 18A for example 100°C, which is higher than ambient temperature. Thus, at ambient or normal temperatures material 20A is glassy or brittle, but when heated above the glass transition temperature, $T_g$, immediately transforms through a leathery or pliable condition into a rubbery condition. Material 20A also has (2) a relatively low thermal conductivity. Therefore, low-power heat can be used to quickly and locally, but only slightly, expand material 20A due to these properties.

Material 20A may be either lightly cross-linked or depend upon chain entanglements to prevent excessive flow, and, may thus be either thermoplastic or thermoset with a relatively low yield strain. Therefore, upon expansion, the cross-linking or entanglements limits the viscous flow and a stretching of material 20A occurs.

Furthermore, material 20A has a modulus of elasticity that varies with temperature. This modulus decreases with increasing temperature. This results in a reversible viscoelastic strain being induced very quickly at low light power, which holds the bump B, as shown in Fig. 3.

Substrate 14 is a material that may, but not necessarily have, a low coefficient of thermal expansion.

Layer 18 and layer 20 are optically coupled, so that substantially all the light that is propagated through layer 20 is absorbed in layer 18. This optical coupling is provided by the material 20A having about the same index of refraction as material 18A. Thus, since substantially all this light can be coupled through top layer 20 to bottom layer 18, there is no loss of light, and therefore, low-power light sources can be used.

Material 18A and material 20A are also capable of being optically tuned to any of a plurality of desired or given wavelengths of light. To accomplish this tuning, material 18A and material 20A can each constitute a light-transparent material that has added to it a dye or pigment to cause the respective material 18A and material 20A to absorb the given wavelength of light. For reasons to be discussed more fully below, material 18A and material 20A will be tuned to absorb different wavelengths of light with material 20A being substantially, but not entirely, transparent to the wavelength of light that can be absorbed by the material 18A. This optical tuning has the advantage of making the optical data storage medium 12 highly flexible in that it can be tuned to operate with a variety of different laser sources that are currently available and inexpensive or that might be available in the future.

Write mode

Fig. 4A—Fig. 4C illustrate a method for writing a data bit thermally at the bit area BA. With reference to Fig. 4A, assume that the bit area BA of the erasable optical data storage medium 12 is in the relaxed condition described in connection with Fig. 2. In this relaxed condition, at ambient temperature, as previously mentioned, material 18A may be above its glass transition tempera-

ture, $T_g$, and, therefore, rubbery, whereas material 20A is below its glass transition temperature, $T_g$, and, therefore, glassy. Also, at this time none of the mechanical forces mentioned above have been produced. Furthermore, the material 18A and material 20A have the other properties and characteristics previously described, including for example, material 18A and material 20A being high yield strain and lower yield strain, respectively.

Then, to write a data bit thermally, the method includes heating the material 18A to expand the material 18A within its elastic limit. At this time of heating material 18A, the material 20A also is heated above its glass transition temperature, $T_g$, which makes the material 20A rubbery. Preferably, as shown in Fig. 4A, the heating of material 18A and material 20A is accomplished by generating a laser beam $LB_1$ that has a wavelength which is substantially transparent to the material 20A and absorptive by the material 18A, and focusing the laser beam $LB_1$ through the material 20A onto the material 18A. The light of the laser beam $LB_1$ may be slightly absorbed by the material 20A to produce the heat for making this material 20A rubbery and is substantially absorbed by material 18A for elastically expanding the material 18A onto the material 20A.

Then, as shown in Fig. 4B, the next step is allowing the heated material 18A to expand and push up the heated material 20A creating a deformation or bump, while the heated material 18A, expands. The next step, shown in Fig. 4C, includes cooling the expanded material 20A below its glass transition temperature, $T_g$, while the material 18A is in the expanded condition. Upon cooling, the material 20A forms a reversibly fixed deformation or bump B and holds the material 18A in the expanded condition. Thus, at this time, a data bit of one logic level, e.g., logic 1 has been written with the bit area BA being in the expanded condition described in connection with Fig. 3. If a logic 0 were to be written at the bit area BA, then laser beam $LB_1$ would not be actuated and the bit area BA would remain in the relaxed condition shown in Fig. 2.

As an alternative to the above-described heating step, in which material 20A slightly absorbs the light of the laser beam $LB_1$, material 20A may absorb no such light. Rather, a small amount of the heat that is absorbed in material 18A is conducted or transferred to material 20A to heat the latter above its glass transition temperature, $T_g$.

As another alternative to the heating step shown in Fig. 4A, in which only the laser beam $LB_1$ is used, the method can include first heating the material 20A above its glass transition temperature, $T_g$, by generating a laser beam $LB_2$ shown in dotted lines and focusing the laser beam $LB_2$ on the material 20A. The laser beam $LB_2$ is of a wavelength that is substantailly absorbed by material 20A. Immediately thereafter, the laser beam $LB_1$ is actuated and focused on the material 18A as described above, with the method for writing the data bit thermally continuing also as described above. One advantage to using the laser beam $LB_2$ initially is to more quickly bring the material 20A to a rubbery condition and, thereby, be able to write a data bit more quickly.

Erase mode

Fig. 5A—Fig. 5C disclose the method for erasing a data bit thermally and mechanically. Assume that the bit area BA has a data bit written as illustrated in Fig. 5A, which shows the same expanded condition for the bit area BA as in Fig. 4C in which the material 20A is holding the material 18A in an expanded condition at ambient temperature. Then, the method includes heating the material 20A to a temperature above the glass transition temperature, $T_g$, to make the material 20A rubbery. This heating of the material 20A, as shown in Fig. 5A, can be accomplished by generating and focusing the laser beam $LB_2$ onto material 20A. The heating of material 20A causes a relaxation of the holding by the material 20A of the material 18A, thereby allowing the mechanical forces previously mentioned to rapidly return the bit area BA to the relaxed condition shown in Fig. 4A. In particular, the elastic force in the material 18A assists in causing a quick return of the dual layer 16 to the relaxed condition. Upon this relaxation, the material 20A and the overall dual layer 16 returns to the fully relaxed condition, and shown in Fig. 5B and as was described in connection with Fig. 2. The dual layer 16, upon cooling, returns to a smooth condition.

Moreover, and as indicated above, the dual layer 16 has a relaxation time which is dependent, in part, on forces produced in response to the viscoelastic properties of the material 18A.

Read mode

Fig. 6A—Fig. 6B illustrates a method of reading a data bit optically. Assume that a data bit, for example, a logic 1, has been written at the bit area BA as shown in Fig. 6A in which the bump B has been formed, as described above. To read this data bit, the laser beam $LB_1$, which is at a lower power level than is used for writing or erasing the data bit, is generated and focused on the bump B of the material 20A. Similarly, assume a data bit of logic 0 has been written in the bit area BA, as shown in Fig. 6B, i.e., no bump B is produced. Again, the laser beam $LB_1$ at lower power level than is used for writing or erasing the data bit is generated and focused on the material 20A.

In both read instances, the light of laser beam $LB_2$ will be reflected from the material 20A. Due to the difference in thickness or height H between the expanded condition of dual layer 16 shown in Fig. 6A and the relaxed condition of the dual layer 16 shown in Fig. 6B, there is a phase shift between the light of laser beam $LB_1$ that is reflected from the material 20A, respectively. This phase shift or difference can be detected with a high signal-to-noise ratio to distinguish a logic 1 from a logic 0 bit. Alternatively, there will be a difference in amplitude of the reflected light between the Fig.

6A and Fig. 6B conditions of bit area BA. This difference in amplitude can be detected with a high signal-to-noise ratio as logic 1 and logic 0 bits, respectively. More light scattering and, hence, reduced amplitude will be detected in the Fig. 6A condition than the Fig. 6B condition.

Erase/write cycle

Fig. 7A—Fig. 7B are used to explain an erase/write cycle for erasing one data bit and writing another data bit at one bit area BA. As will be further described, the erase/write cycle occurs rapidly within the same view of an objective lens used to focus laser beam $LB_1$ and $LB_2$ on the material 18A and the material 20A, respectively, as the bit area BA moves across the lens.

Assume, as shown in Fig. 7A, that a bit has been written with bit area BA in the expanded condition. The erase/write cycle then includes first heating the material 20A at the bit area BA to erase the bit. The heating can be accomplished by generating and focusing the laser beam $LB_2$ on the material 20A to heat the material above its glass transition temperature, $T_g$, to a rubbery condition. Then, while the material 20A is still so heated, and before the dual layer 16 has relaxed, another data bit, e.g., a logic 1, is written at the bit area BA in the manner previously described for the Write Mode. This step of writing includes generating and focusing the laser beam $LB_1$ on the material 18A, as shown in Fig. 7B, whereby the elastic expansion previously described occurs, followed by the cooling of the material 20A. However, if a logic 0 were to be written during an erase/write cycle, then after heating the material 20A, as shown in Fig. 7A, the dual layer 16 is allowed to relax and cool as previously described for the Erase Mode.

The material 18A and the material 20A preferably are polymers, and particularly, amorphous polymers. Specifically, the material 18A can be, for example, elastomers having the abovementioned thermoelastic properties and characteristics. The elastomers can include butyl rubbers, silicone rubbers, natural rubbers, ethylene-copolymers, styrenebutadiene rubbers, and a number of other synthetic rubbers.

The amorphous polymers of the material 20A are those having the thermosetting or thermoplastic properties with characteristics mentioned above. These may include, for example, cellulose acetate, cellulose acetate-butyrate, polystyrene, polysulfonamide, polycarbonate, cellulose nitrate, poly(ethyl-methacrylate), poly(vinyl butyral), aromatic polyester, polyamides and a wide variety of combinations thereof. Other amorphous polymers that can also be used include, for example, acrylic polymers, polyvinyl acetate, silicone resins, alkyd resins, styrene-butadiene copolymers, vinyl chloride-vinyl acetate copolymers, ethylcellulose, polyvinyl alcohol, and various other polymers.

Examples of dyes or pigments that can be used to tune the material 18A and the material 20A are nigrosine dye, aniline blue, Calco Oil Blue, chrome yellow, ultramarine blue, Quinoline Yellow, methylene blue chloride, Monastral Blue, Malachite Green Ozalate, Rose Bengal, Monastral Red, Sudan Black BM, and mixtures thereof. Other examples of dyes include those disclosed in U.S. Patent No. 3,689,768 at column 3, lines 1—22, and U.S. Patent No. 4,336,545 at column 8, lines 53—68, which patents are incorporated herein by reference for these dyes or pigments.

Preliminary laboratory fabrication and testing procedures have been performed based on the above-mentioned principles of the present invention. For fabrication, an epoxy resin, Epon 828 from Shell Chemical Company dyed with a red-orange dye, Savinyl RLS Scarlet, manufactured by the Sandoz Corporation, New Jersey, was used for the material 20A. This material 20A was placed on a mandrel, coated with a release agent, which was spun at 3,000 RPM, resulting in a 3 micron thick layer 20A which was then cured. For the material 18A, Dow Corning 734, a clear silicone rubber, having a coefficient of thermal expansion of $920 \times 10^{-6}$ cm³/cm³/0°C, was mixed with a blue-green dye, Savinyl RLS Blue, manufactured by the Sandoz Corporation. The material 18A was then applied to the material 20A by using a "knife spread" technique. Then, the dual layer 16 was released or taken off the mandrel and mounted on a substrate 14 of aluminum.

The fabricated substrate 14 and the dual layer 16 were then mounted in a "single-shot" laser system having a Krypton laser at a wavelength of 647 nanometers. Then, to write a data bit, the laser was actuated for 50 nanoseconds using an electro-optical crystal, with the laser light then propagated through a shutter, a 25 micron pinhole and a .45 N.A. objective lens which was anti-reflective coated. The laser power was at 820—880 milliwatts, with about 20—30% of this power being provided at the dual layer 16. Bumps B were created in the range of 2.5—5 microns in diameter.

It was found that, even though the fabricated substrate 14 and the dual layer 16 were not optically smooth and had relatively large pits or valleys resulting from a non-uniform mandrel surface, the bumps B were also formed in these pits or valleys.

A similar fabrication and testing procedure for writing data bits, as described above, was performed in which the mandrel was spun at 7,500 RPM. This resulted in a thickness of 0.5 microns for the material 20A. Data bits were written with the Krypton laser being at about 150 milliwatts of power and about 40—45 milliwatts of this power being at the dual layer 16. Thus, it was found that less power was required for writing data bits set the dual layers 16 of reduced thickness.

To erase the data bits written on the dual layer 16, a "single-shot" erase system having an Argon laser at a wavelength of 488 nanometers was used. The laser beam was modulated using an acousto-optical modulator and was focused on bumps B through a microscope system using a 20× objective lens. The laser was operated at 1 microsecond pulse duration times and at 55 milliwatts of power, with about 11—12% of this power being applied at the dual layer 16. The bumps B were erased, as previously described.

The data bits that were written on the fabricated substrate 14 and the dual layer 16 were read using white light and a microscope to project images of the bumps B on a glass plate. Then, using a fiber optic bundle hooked to a photomultiplier, the intensity of the light at the glass plate was detected. It was found that a satisfactory contrast ratio of about 2:1 to 3:1 existed between areas of the glass plate having the bumps B and areas of the glass plate having no bumps B.

Fig. 8 illustrates one embodiment of a practical electro-optical system 26 for carrying out the optical recording of data on the erasable optical data storage medium 12. In particular, Fig. 8 shows one bit area BA, similar to the bit area BA shown in Fig. 2, for writing, reading and erasing a bit as described above.

Electro-optical system 26 includes a digital data processing circuit 28 whose outputs on respective lines 30 and 32 control respective pulsed variable-intensity lasers 34 and 36. Laser 34 outputs the laser beam $LB_2$ and laser 36 outputs the laser beam $LB_1$. A pair of lenses 38 and 40 collimate the laser beams $LB_2$ and $LB_1$, respectively, which are then reflected by a mirror 42 and propagated through a beam splitter 44.

The laser beam $LB_2$ and laser beam $LB_1$ are then passed through a filter 46 (e.g. $\frac{1}{4}$ waveplate) and then propagated through an objective lens 48 which focuses the laser beams on the moving bit area BA. Light reflected by the material 20A of bit area BA is collected by the lens 48 and propagated through filter 46 to the beam splitter 44, where the reflected light is then propagated to a light sensor 50.

As illustrated, laser beam $LB_2$ and laser beam $LB_1$ are spatially separated from one another. Also, the laser beam $LB_2$ is focused onto the bit area BA ahead of the laser beam $LB_1$ relative to the direction of movement of the bit area BA for erase/write purposes to be described below.

In the operation of the electro-optical system 26, assume that a bit has been written on the bit area BA, that this bit is to be erased and that another bit is to be written at the bit area BA. This will constitute an erase/write cycle. In describing this cycle, reference should be made to the above disclosure of the erase/write cycle of the present invention.

As the bit area BA moves across the view of the objective lens 48, the laser 34 is modulated by the output of the data processing circuit 28 on line 30 to produce a high intensity laser beam $LB_2$. The laser beam $LB_2$ is then focused on the material 20A by lens 48 to heat it to a rubbery condition. Then, while the material 20A is still rubbery, and with the bit area BA continuing to be in the same view of the objective lens 48, the laser 36 is immediately modulated by the output of data processing circuit 28 over line 32 to produce the laser beam $LB_1$. Consequently, the laser beam $LB_1$

is focused by the objective lens 48 onto the material 18A to heat it and cause the elastic expansion previously described. Thereafter, the bit area BA will move out of the view of the objective lens 48 and cool, so that either a logic 1 or a logic 0 will be written. In other words, the erase/write cycle can occur within one bit cell time, which means within the same view of the objective lens 48.

Assume now that instead of an erase/write cycle only an erase cycle is required, in which the bit written at the bit area BA is to be erased with no other bit written at the bit area BA. As the bit area BA moves within the view of the objective lens 48, the data processing circuit 28, via line 30, modulates the laser 34 to output a high intensity laser beam $LB_2$ which is then focused on the material 20A. Therefore, the material 20A is heated and then cools as the bit area moves outside the view of the objective lens 48. The result is that the bit will be erased in the manner previously described.

Assume now that it is desired to read a bit stored at the bit area BA, which bit is either a logic 1 or a logic 0. As the bit area BA moves within the view of the objective lens 48, the data processing circuit 28, via line 30, modulates laser 34 to produce a low intensity laser beam $LB_1$ that is focused on the material 20A. The reflected light is then collected by lens 48 and propagated by filter 48 and beam splitter 44 to sensor 50 which then detects the logic state of the bit. As previously mentioned, differences in phase or amplitude of the reflected light can be detected by sensor 50 to distinguish a logic 1 from a logic 0.

Fig. 9 is similar to Fig. 8 except that rather than having spatially separated laser beams $LB_1$ and $LB_2$, the two laser beams are concentric or co-linear. The co-linear beams $LB_1$ and $LB_2$ are propagated so that they are focused co-linearly on the material 18A and the material 20A as the bit area BA moves within the view of the objective lens 48. The co-linear laser beams $LB_1$ and $LB_2$ are produced by having laser 34 and laser 36 arranged, as shown, whereby light from each laser is propagated through a pollice beam splitter BS. The erase/write cycle, the erase cycle and the read cycle are performed in a similar manner in Fig. 9 as described in connection with Fig. 8.

The foregoing description of preferred embodiments of the invention has been presented for purposes of illustration and description. The embodiments were chosen and described in order to best explain the principles of the invention and its practical application to thereby enable others skilled in the art to best utilize the invention in various embodiments and with various modification as are suited to the particular use contemplated. It is intended that the scope of the invention be defined by the claims appended hereto.

## Claims

1. An optical recording medium (10) comprising:

(a) a first layer (18) of a first material (18A);

(b) a second layer (20) of a second material (20A) on said first material (18A);

(c) said first and second layers (18, 20) cooperating as a medium (10) for forming an optically detectable deformation (B) therein by thermal expansion of said first material (18A) without liquefaction or gasification of said first or second materials (18A, 20A) when said first layer (18) is locally heated with light radiation of a first preselected wavelength (LB$_1$); said medium (10) characterized by said first and second layers being supported on a substrate (14); and

(d) said first material (18A) and said second material (20A) being sufficiently bonded to each other to enable said second layer (20) to hold said first material (18A) in stretched, expanded condition upon cessation of said light radiation and cooling of said first material (18A), retaining said optically detectable deformation (B), said second layer (20) being sufficiently strong and rigid to hold said first material (18A) in stretched, expanded condition.

2. The medium (10) of claim 1, further characterized in that said second material (20A) is adapted to substantially transmit light of said first preselected wavelength (LB$_1$).

3. The medium (10) of claim 1, further characterized by said first and second layers (18, 20) further cooperating as an erasable optical recording medium (10) for relaxing said optically-detectable deformation (B), without liquefaction or gasification of said first or second materials (18A, 20A), when said second material (20A) is locally heated with light radiation of a second preselected wavelength (LB$_2$).

4. The medium (10) of claim 1, further characterized by said first material (18A) having a glass transition temperature ("Tg1") and a high coefficient of thermal expansion, said second material (20A) having a glass transition temperature ("Tg2") above ambient temperature and also above Tg1, said second material (20A) adapted to permit localized thermal expansion of said first material (18A) when said second material (20A) is above Tg2 and adapted to retain said first material (18A) bonded thereto in an expanded configuration when said second material (20A) is cooled below Tg2.

5. The medium (10) of claim 4, further characterized in that said medium is adapted to permit contraction of said first material (18A) from its expanded configuration when said second material (20A) is locally heated above Tg2.

6. The medium (10) of claim 1, further characterized in that said first and second materials (18A, 20A) are polymers.

7. The medium (10) of claim 1, further characterized in that said first and second materials (18A, 20A) have relatively low thermal conductivity.

8. The medium (10) of claim 1, further characterized in that said first material (18A) includes first light-sensitive means for absorbing energy from light radiation of said first preselected wavelength (LB$_1$).

9. The medium (10) of claim 8, further characterized in that said first light-sensitive means includes a dye.

10. The medium (10) of claim 1, further characterized in that said second material (20A) includes second light-sensitive means for absorbing energy from light radiation of a second preselected wavelength (LB$_2$) while substantially transmitting light radiation of said first preselected wavelength (LB$_1$).

11. The medium (10) of claim 10, further characterized in that said second light-sensitive means includes a dye.

12. The medium (10) of claim 1, further characterized in that said first material (18A) is elastic, having a relatively high yield strain.

13. The medium (10) of claim 4, further characterized in that said second material (20A) is thermoplastic or thermoset with a relatively low yield strain.

14. The medium (10) of claim 4, further characterized in that said second material (20A) is glassy at ambient temperature but becomes rubbery when heated above Tg2.

15. The medium (10) of claim 5, further characterized in that said expanded first material (18A), upon contraction, assists said second material (20A) to relax said optically-detectable deformation (B).

16. The medium (10) of claim 5, further characterized in that said first material (18A) includes elastic means for relaxing said optically-detectable deformation (B) by pulling upon said second material (20A) bonded thereto.

17. A method of writing data in an otpical data storage medium (10) having a first layer (18) of a first material (18A) and a second layer (20) of a second material (20A) by heating said first material (18A) to thermally expand said first material (18A), and permitting said expanding first material (18A) to deform said second layer (20) causing an optically detectable deformation (B), said first and second layers being supported on a substrate (14), said method characterized by cooling said first material (18A), and causing said second layer (20) to hold said first material (18A) in expanded condition.

18. The method of claim 17, further characterized in that said first material (18A) is elastic, said method including expanding said first material (18A) substantially within its elastic limit.

19. The method of claim 18, said second material (20A) having a glass transition temperature, said method further characterized by the steps of raising said second material (20A) above its glass transition to permit said expanding first material (18A) to deform said second layer (20), and cooling said second material (20A) below its glass transition temperature while said first material (18A) is in expanded condition.

20. The method of claim 17, further characterized in that said first material (18A) is adapted to substantially absorb radiant energy of a first preselected wavelength (LB₁), and said second material (20A) is adapted to substantially transmit radiant energy of said first preselected wavelength (LB₁), said method including generating a laser beam of said first preselected wavelength (LB₁) and causing it to pass substantially through said second layer (20) and be absorbed by said first material (18A).

21. The method of claim 19, further characterized by the steps of heating said second material (20A) above its glass transition temperature and allowing the elastic properties of said expanded, cooled first material (18A) to pull said second layer (20) flat, erasing said optically detectable deformation (B).

22. The method of claim 21, further characterized in that said second material (20A) is cross-linked to prevent viscous flow of said second material (20A) when above its glass transition temperature, the expansion of said first material (18A) and resultant deformation of said second layer (20) stretching the cross-linking of said second material (20A), the step of heating said second material causing the stretched cross-linking of said second material (20A) to relax and assist the erasure of said optically detectable deformation (B).

23. The method of claim 21, further characterized in that said second material (20A) is adapted to at least partially absorb radiant energy of a second preselected wavelength (LB₂), the erasure step of said method including generating a second laser beam of said second preselected wavelength (LB₂) and causing it to be absorbed by said second material (20A) to heat said second material (20A) above its glass transition temperature.

24. The method of claim 23, further characterized by generating said second laser beam of said second preselected wavelength (LB₂) to heat said second material (20A) above its glass transition temperature prior to generating said first laser beam of said first preselected wavelength (LB₁) to heat and expand said first material (18A).

25. The method of claim 24, further characterized by the step of generating said first laser beam of said first preselected wavelength (LB₁) while said second material (20A) remains above its glass transition temperature.

26. The method of claim 20, further characterized by the step of dyeing said first material (18A) to substantially absorb radiant energy of said first preselected wavelength (LB₁).

27. The method of claim 23, further characterized by the step of dyeing said second material (20A) with a dye which is adapted to substantially transmit radiant energy of said first preselected wavelength (LB₁) and at least partially absorb radiant energy of said second preselected wavelength (LB₂).

28. The method of claim 17, further characterized by the step of bonding said first and second layers (18, 20) together.

29. The method of claim 17, further characterized in that said first and second materials (18A, 20A) are amorphous polymers.

30. The method of claim 17, further characterized in that said first and second materials (18A, 20A) do not liquify, gasify, or undergo change in crystallographic structure.

**Patentansprüche**

1. Optischer Aufzeichnungsträger (10) mit
(a) einer ersten Schicht (18) aus einem ersten Material (18A),
(b) einer zweiten Schicht (20) aus einem zweiten Material (20A) auf dem ersten Material (18A), wobei die ersten und die zweite Schicht auf einem Substrat (14) gehalten sind, und
(c) die erste und die zweite Schicht (18, 20) als ein Träger (10) zusammenarbeiten, um darin eine optisch erfassbare Verformung (B) durch thermische Ausdehnung des ersten Materials (18A) ohne Verflüssigung oder Vergasung des ersten oder zweiten Materials (18A, 20A) du bilden, wenn die erste Schicht (18) örtlich mit einer Lichtstrahlung einer ersten vorgewählten Wellenlänge (LB₁) erhitzt wird, welches Medium (10) dadurch gekennzeichnet ist, daß
(d) das erste Material (18A) und das zweite Material (20A) in ausreichendem Maße miteinander verbunden sind, so daß die zweite Schicht (20) das erste Material (18A) nach dem Ende der Lichtstrahlung und einer Abkühlung des ersten Materials (18A) in einem gestrecken, gedehnten Zustand halten kann, wodurch die optisch erfaßbare Information (B) festgehalten wird, wobei die zweite Schicht (20) ausreichend fest und starr ist, um das erste Material (18A) im gestreckten, gedehnten Zustand zu halten.

2. Träger (10) nach Anspruch 1, dadurch gekennzeichnet, daß das zweite Material (20A) Licht mit der ersten vorgewählten Wellenlänge (LB₁) im wesentlichen durchlassen kann.

3. Träger (10) nach Anspruch 1, dadurch gekennzeichnet, daß die erste und die zweite Schicht (18, 20) weiterhin als löschbarer optischer Aufzeichnungsträger (10) zusammenarbeiten, um die optisch erfaßbare Verformung (B) zu entspannen, ohne das erste oder zweite Material (18A, 20A) zu verflüssigen oder zu vergasen, wenn das zweite Material (20A) örtlich mit einer Lichtstrahlung einer zweiten vorgewählten Wellenlänge (LB₂) erhitzt wird.

4. Träger (10) nach Anspruch 1, dadurch gekennzeichnet, daß das erste Material (18A) eine Einfriertemperatur ("Tg1") und einen hohen Wärmeausdehnungskoeffizienten hat, das zweite Material (20A) eine Einfriertemperatur ("Tg2") über der Umgebungstemperatur und auch über Tg1 hat, das zweite Material (20A) eine örtliche Wärmeausdehnung des ersten Materials (18A) zulassen kann, wenn das zweite Material (20A) über Tg2 liegt, und das erste Material (18A), das damit verbunden ist, in der gedehnten Form halten kann, wenn das zweite Material (20A) unter Tg2 abgekühlt ist.

5. Träger (10) nach Anspruch 4, dadurch gekennzeichnet, daß der Träger eine Kontraktion des ersten Materials (18A) aus seiner gedehnten Form zulassen kann, wenn das zweite Material (20A) örtlich über Tg2 erhitzt wird.

6. Träger (10) nach Anspruch 1, dadurch gekennzeichnet, daß das erste und das zweite Material (18A, 20A) Polymerisate sind.

7. Träger (10) nach Anspruch 1, dadurch gekennzeichnet, daß das erste und das zweite Material (18A, 20A) eine relativ niedrige Wärmeleitfähigkeit haben.

8. Träger (10) nach Anspruch 1, dadurch gekennzeichnet, daß das erste Material (18A) erste lichtempfindliche Mittel enthält, um Energie von der Lichtstrahlung mit der ersten vorgewählten Wellenlänge (LB$_1$) zu absorbieren.

9. Träger (10) nach Anspruch 1, dadurch gekennzeichnet, daß die ersten lichtempfindlichen Mittel einen Farbstoff einschließen.

10. Träger (10) nach Anspruch 1, dadurch gekennzeichnet, daß das zweite Material (20A) zweite lichtempfindliche Mittel zum Absorbieren von Energie von der Lichtstrahlung mit der zweiten vorgewählten Wellenlänge (LB$_2$) enthält, während es im wesentlichen die Lichtstrahlung mit der ersten vorgewählten Wellenlänge (LB$_1$) durchläßt.

11. Träger (10) nach Anspruch 10, dadurch gekennzeichnet, daß die zweiten lichtempfindlichen Mittel einen Farbstoff einschließen.

12. Träger (10) nach Anspruch 1, dadurch gekennzeichnet, daß das erste Material (18A) elastisch ist und eine relativ hohe Zugfestigkeit hat.

13. Träger (10) nach Anspruch 4, dadurch gekennzeichnet, daß das zweite Material (20A) thermoplastisch oder wärmehärtend mit einer relativ niedrigen Zugfestigkeit ist.

14. Träger (10) nach Anspruch 4, dadurch gekennzeichnet, daß das zweite Material (20A) bei Umgebungstemperatur glasartig ist, jedoch dann, wenn es über Tg$_2$ erhitzt wird, gummiartig wird.

15. Träger (10) nach Anspruch 5, dadurch gekennzeichnet, daß das gedehnte erste Material (18A) bei einer Kontraktion das zweite Material (20A) darin unterstützt, die optisch erfaßbare Verformung (B) zu entspannen.

16. Träger (10) nach Anspruch 5, dadurch gekennzeichnet, daß das erste Material (18A) elastische Mittel enthält, um die optisch erfaßbare Verformung (B) dadurch zu entspannen, daß am zweiten damit verbundenen Material (20A) gezogen wird.

17. Verfahren zum Einschreiben von Daten in einen optischen Datenspeicherträger (10) mit einer ersten Schicht (18) aus einem ersten Material (18A) und einer zweiten Schicht (20) aus einem zweiten Material (20A), dadurch, daß das erste Material (18A) erhitzt wird, um das erste Material (18A) thermisch zu dehnen, und daß es dem gedehnten ersten Material (18A) ermöglicht wird, die zweite Schicht (20) zu verformen, um eine optisch erfaßbare Verfomung (B) zu bewirken, wobei die erste und die zweiten Schicht auf einem Substrat (14) gehalten sind, welches Verfahren dadurch gekennzeichnet ist, daß das erste Material (18A) abgekühlt wird und bewirkt wird, daß die zweite Schicht (20) das erste Material (18A) im gedehnten Zustand hält.

18. Verfahren nach Anspruch 17, dadurch gekennzeichnet, daß das erste Material (18A) elastisch ist und das Verfahren ein Dehnen des ersten Materials (18A) im wesentlichen innerhalb seiner elastischen Grenze einschließt.

19. Verfahren nach Anspruch 18, wobei das zweite Material (20A) eine Einfriertemperatur hat, welches Verfahren durch die Schritte gekennzeichnet ist, daß das zweite Material (20A) auf eine Temperatur über seiner Einfriertemperatur gebracht wird, damit das sich dehnende erste Material (18A) die zweite Schicht (20) verformen kann, und daß das zweite Material (20A) unter seine Einfriertemperatur abgekühlt wird, während sich das erste Material (18A) im gedehnten Zustand befindet.

20. Verfahren nach Anspruch 17, dadurch gekennzeichnet, daß das erste Material (18A) im wesentlichen Strahlungsenergie einer ersten vorgewählten Wellenlänge (LB$_1$) absorbieren kann, und daß das zweite Material (20A) im wesentlichen die Strahlungsenergie mit der ersten vorgewählten Wellenlänge (LB$_1$) durchlassen kann, wobei das Verfahren einschließt, daß ein Laserstrahl mit der ersten vorgewählten Wellenlänge (LB$_1$) erzeugt wird, und daß bewirkt wird, daß er im wesentlichen durch die zweite Schicht (20) hindurchgeht und durch das erste Material (18A) absorbiert wird.

21. Verfahren nach Anspruch 19, gekennzeichnet durch die Schritte, daß das zweite Material (20A) über seine Einfriertemperatur erhitzt wird, und daß es ermöglicht wird, daß die elastischen Eigenschaften des gedehnten abgekühlten ersten Materials (18A) die zweite Schicht (20A) glattziehen, um die optisch erfaßbare Verformung (B) zu löschen.

22. Verfahren nach Anspruch 21, dadurch gekennzeichnet, daß das zweite Material (20A) vernetzt ist, um ein viskoses Fließen des zweiten Materials (20A) zu verhindern, wenn dieses über seiner Einfriertemperatur liegt, die Dehnung des ersten Materials (18A) und die daraus resultierende Verformung der zweiten Schicht (20), die Vernetzung des zweiten Materials (20A) strecken und der Schritt der Erhitzung des zweiten Materials dazu führt, daß die gestreckte Vernetzung des zweiten Materials (20A) entspannt wird und das Löschen der optisch erfaßbaren Verformung (B) unterstützt.

23. Verfahren nach Anspruch 21, dadurch gekennzeichnet, daß das zweite Material (20A) wenigstens teilweise Strahlungsenergie einer zweiten vorgewählten Wellenlänge (LB$_2$) absorbieren kann, der Löschschritt des Verfahrens einschließt, daß ein zweiter Laserstrahl mit einer zweiten vorgewählten Wellenlänge (LB$_2$) erzeugt wird und bewirkt wird, daß er durch das zweite Material (20A) absorbiert wird, um das zweite Material (20A) über seine Einfriertemperatur zu erhitzen.

24. Verfahren nach Anspruch 23, dadurch gekennzeichnet, daß der zweite Laserstrahl mit der zweiten vorgewählten Wellenlänge (LB$_2$) zum Erhitzen des zweiten Materials (20A) über seine Einfriertemperatur vor der Erzeugung des ersten Laserstrahls mit der ersten vorgewählten Wellenlänge (LB$_1$) zum Erhitzen und Ausdehnen des ersten Materials (18A) erzeugt wird.

25. Verfahren nach Anspruch 24, dadurch gekennzeichnet, daß der Schritt der Erzeugung des ersten Laserstrahls mit der ersten vorgewählten Wellenlänge (LB$_1$) erfolgt, während das zweite Material (20A) über seiner Einfriertemperatur bleibt.

26. Verfahren nach Anspruch 20, gekennzeichnet durch den Schritt der Färbung des ersten Materials (18A), um im wesentlichen die Strahlungsenergie mit der ersten vorgewählten Wellenläng (LB$_1$) zu absorbieren.

27. Verfahren nach Anspruch 23, gekennzeichnet durch den Schritt der Färbung des zweiten Materials (20A) mit einem Farbstoff, der im wesentlichen die Strahlungsenergie mit der ersten vorgewählten Wellenlänge (LB$_1$) durchlassen kann und wenigstens teilweise die Strahlungsenergie mit der zweiten vorgewählten Wellenläng (LB$_2$) absorbiert.

28. Verfahren nach Anspruch 17, gekennzeichnet durch den Schritt der Verbindung der ersten und der zweiten Schicht (18, 20).

29. Verfahren nach Anspruch 17, dadurch gekennzeichnet, daß das erste und das zweite Material (18A, 20A) amorphe Polymerisate sind.

30. Verfahren nach Anspruch 17, dadurch gekennzeichnet, daß das erste und das zweite Material (18A, 20A) sich nicht verflüssigen, nicht gasförmig werden oder eine Änderung in der kristallographischen Struktur erfahren.

## Revendications

1. Milieu d'enregistrement optique (10) comprenant:

(a) une première couche (18) d'une première matière (18A);

(b) une seconde couche (20) d'une seconde matière (20A) sur la première matière (18A), les première et seconde couches étant portées par un substrat (14); et

(c) les première et seconde couches (18, 20) coopérant comme un milieu (10) pour y former une déformation (B) optiquement détectable par la dilatation thermique de la première matière (18A), sans liquéfaction ni gazéification de la première ou de la seconde matière (18A, 20A) lorsque la première couche (18) est chauffée localement par la radiation lumineuse d'une première longueur d'onde (LB$_1$) choisie à l'avance;

le milieu (10) étant caractérisé en ce que la première matière (18A) et la seconde matière (20A) sont suffisamment liées l'une à l'autre pour permettre que la seconde couche (20) maintienne la première matière (18A) dans un état étiré dilaté, lors de la cessation de la radiation lumineuse et du refroidissement de la première matière (18A), en retenant la déformation optiquement détectable (B), la seconde couche (20) étant suffisamment résistante et rigide pour maintenir la première matière (18A) dans un état étiré dilaté.

2. Milieu (10) suivant la revendication 1, caractérisé encore en ce que la seconde matière (20A) est propre à transmettre en substance de la lumière de la première longueur d'onde (LB$_1$) choisie à l'avance.

3. Milieu (10) suivant la revendication 1, caractérisé encore en ce que les première et seconde couches (18, 20) coopèrent en outre comme un milieu (10) d'enregistrement optique susceptible d'être effacé, pour relâcher la déformation (B) optiquement détectable, sans liquéfaction ni gazéification de la première ou de la seconde matière (18A, 20A) lorsque la seconde matière (20A) est localement chauffée par la radiation lumineuse d'une seconde longueur d'onde (LB$_2$) choisie à l'avance.

4. Milieu (10) suivant la revendication 1, caractérisé encore en ce que la première matière (18A) possède une température de transition vitreuse ("Tg1") et un coefficient élevé de dilatation thermique, la seconde matière (20A) ayant une température de transition vitreuse ("Tg2") au-dessus de la température ambiante et également au-dessus de Tg1, la seconde matière (20A) étant propre à permettre une dilatation thermique localisée de la première matière (18A) lorsque la seconde matière (20A) est au-dessus de Tg2 et est propre à retenir la première matière (18A) qui lui est liée, dans une configuration dilatée lorsque la seconde matière (20A) est refroidie en dessous de Tg2.

5. Milieu (10) suivant la revendication 4, caractérisé encore en ce que le milieu est propre à permettre la contraction de la première matière (18A) à partir de sa configuration dilatée lorsque la seconde matière (20A) est chauffée localement au-dessus de Tg2.

6. Milieu (10) suivant la revendication 1, caractérisé encore en ce que les première et seconde matières (18A, 20A) sont des polymères.

7. Milieu (10) suivant la revendication 1, caractérisé encore en ce que les première et seconde matières (18A, 20A) ont une conductivité thermique relativement faible.

8. Milieu (10) suivant la revendication 1, caractérisé encore en ce que la première matière (18A) comprend de premiers moyens sensibles à la lumière pour absorber de l'énergie à partir d'une radiation lumineuse de la première longueur d'onde (LB$_1$) choisie à l'avance.

9. Milieu (10) suivant la revendication 8, caractérisé encore en ce que les premiers moyens sensibles à la lumière comprennent un colorant.

10. Milieu (10) suivant la revendication 1, caractérisé encore en ce que la seconde matière (20A) comprend de seconds moyens sensibles à la lumière pour absorber de l'énergie à partir de la radiation lumineuse d'une seconde longueur

d'onde (LB$_2$) choisie à l'avance, tout en transmettant en substance de la radiation lumineuse de la première longueur d'onde (LB$_1$) choisie à l'avance.

11. Milieu (10) suivant la revendication 10, caractérisé encore en ce que les seconds moyens sensibles à la lumière comprennent un colorant.

12. Milieu (10) suivant la revendication 1, caractérisé encore en ce que la première matière (18A) est élastique, ayant une déformation élastique relativement élevée.

13. Milieu (10) suivant la revendication 4, caractérisé encore en ce que la seconde matière (20A) est thermoplastique ou thermodurcissable, avec une déformation élastique relativement faible.

14. Milieu (10) suivant la revendication 4, caractérisé encore en ce que la seconde matière (20A) est vitreuse à la température ambiante, mais devient caoutchouteuse lorsqu'elle est chauffée au-delà de Tg2.

15. Milieu (10) suivant la revendication 5, caractérisé encore en ce que la première matière (18A) dilatée, lors de sa contraction, aide la seconde matière (20A) à relâcher la déformation (B) optiquement détectable.

16. Milieu (10) suivant la revendication 5, caractérisé encore en ce que la première matière (18A) contient des moyens élastiques pour relâcher la déformation (B) optiquement détectable en tirant sur la seconde matière (20A) qui lui est liée.

17. Procédé pour écrire des données dans un milieu (10) d'emmagasinement de données optiques, ayant une première couche (18) d'une première matière (18A) et une seconde couche (20) d'une seconde matière (20A), en chauffant la première matière (18A) pour dilater thermiquement cette première matière (18A) et en permettant à la première matière (18A) qui se dilate de déformer la seconde couche (20) en provoquant une déformation (B) optiquement détectable, les première et seconde couches étant portées par un substrat (14), le procédé étant caractérisé par le refroidissement de la première matière (18A) et par le fait de faire en sorte que la seconde couche (20) maintienne la première matière (18A) à l'état dilaté.

18. Procédé suivant la revendication 17, caractérisé encore en ce que la première matière (18A) est élastique, le procédé comprenant la dilatation de la première matière (18A) en substance à l'intérieur de sa limite élastique.

19. Procédé suivant la revendication 18, caractérisé en ce que la seconde matière (20A) a une température de transition vitreuse, le procédé étant encore caractérisé par les étapes consistant à élever la seconde matière (20A) au-dessus de sa (température de) transition vitreuse pour permettre à la première matière (18A) qui se dilate de déformer la seconde couche (20), et à refroidir la seconde matière (20A) en dessous de sa température de transition vitreuse, tandis que la première matière (18A) est à l'état dilaté.

20. Procédé suivant la revendication 17, caractérisé encore en ce que la première matière (18A) est propre à absorber en substance de l'énergie rayonnante d'une première longueur d'onde (LB$_1$) choisie à l'avance et en ce que la seconde matière (20A) est propre à transmettre en substance de l'énergie rayonnante de la première longueur d'onde (LB$_1$) choisie à l'avance, le procédé comprenant la génération d'un faisceau laser de la première longueur d'onde (LB$_1$) choisie à l'avance et faisant qu'elle passe en substance à travers la seconde couche (20) et qu'elle soit absorbée par la première matière (18A).

21. Procédé suivant la revendication 19, caractérisé encore par les étapes consistant à chauffer la seconde matière (20A) au-dessus de sa température de transition vitreuse et à permettre aux propriétés élastiques de la première matière (18A) dilatée, refroidie, de tirer la seconde couche (20) à plat en effaçant la déformation (B) optiquement détectable.

22. Procédé suivant la revendication 21, caractérisé encore en ce que la seconde matière (20A) est réticulée pour permettre l'écoulement visqueux de la seconde matière (20A) lorsqu'elle est au-dessus de sa température de transition vitreuse, la dilatatiln de la première matière (18A) et la déformation résultante de la seconde couche (20) étirant la configuration réticulée de la seconde matière (20A), l'étape consistant à chauffer la seconde matière ayant pour effet de faire que la réticulation étirée de la seconde matière se relâche, et à aider l'effacement de la déformation (B) optiquement détectable.

23. Procédé suivant la revendication 21, caractérisé encore en ce que la seconde matière (20A) est propre à absorber au moins partiellement de l'énergie rayonnante d'une seconde longueur d'onde (LB$_2$) choisie à l'avance, l'étape d'effacement du procédé comprenant la génération d'un second faisceau laser de la seconde longueur d'onde (LB$_2$) choisie à l'avance, et le fait qu'il soit absorbé par la seconde matière (20A) pour chauffer la seconde matière (20A) au-dessus de sa température de transition vitreuse.

24. Procédé suivant la revendication 23, caractérisé encore par la génération du second faisceau laser de la seconde longueur d'onde (LB$_2$) choisie à l'avance pour chauffer la seconde matière (20A) au-dessus de sa température de transition vitreuse avant la génération du premier faisceau laser de la première longueur d'onde (LB$_1$) choisie à l'avance pour chauffer et dilater la première matière (18A).

25. Procédé suivant la revendication 24, caractérisé encore par l'étape de la génération du premier faisceau laser de la première longueur d'onde (LB$_1$) choisie à l'avance, tandis que la seconde matière (20A) reste au-dessus de sa température de transition vitreuse.

26. Procédé suivant la revendication 20, caractérisé encore par l'étape consistant à colorer la première matière (18A) pour absorber en substance de l'énergie rayonnante de la première longueur d'onde (LB$_1$) choisie à l'avance.

27. Procédé suivant la revendication 23, caractérisé encore par l'étape consistant à colorer la seconde matière (20A) avec un colorant propre à transmettre en substance de l'énergie rayonnante de la première longueur d'onde (LB$_1$) choisie à l'avance, et à absorber au moins partiellement de l'énergie rayonnante de la seconde longueur d'onde (LB$_2$) choisie à l'avance.

28. Procédé suivant la revendication 17, caractérisé encore par l'étape consistant à lier l'une à l'autre les première et seconde couches (18, 20).

29. Procédé suivant la revendication 17, caractérisé encore en ce que les première et seconde matières (18A, 20A) sont des polymères amorphes.

30. Procédé suivant la revendication 17, caractérisé encore en ce que les première et seconde matières (18A, 20A) ne se liquéfient pas, ne se gazéifient pas et ne subissent pas de changements de leur structure cristallographique.

FIG _ 1

FIG _ 2

FIG _ 3

WRITE MODE

FIG _ 4A

WRITE MODE

FIG _ 4B

FIG _ 4C

ERASE MODE

FIG _ 5A

FIG _ 5B

READ MODE

FIG _ 6A    FIG _ 6B

ERASE/WRITE CYCLE

ERASE

WRITE

FIG _ 7A    FIG _ 7B

2

FIG_8

FIG _ 9